# EUROPÄISCHE PATENTSCHRIFT

(11) **EP 3 849 829 B1**
(45) Veröffentlichungstag und Bekanntmachung des Hinweises auf die Patenterteilung: **11.10.2023**
(21) Anmeldenummer: 19765168.0
(22) Anmeldetag: 31.07.2019
(51) Int. Cl.: B60G 3/14, B60G 7/00, B60K 7/00, B60K 11/00, B60T 1/06, F16D 55/22, F16D 65/00, F16D 55/226, F16D 55/00

(54) **SCHRÄGLENKERRADAUFHÄNGUNG FÜR EIN ÜBER EINEN ELEKTRISCHEN ODER PNEUMATISCHEN MOTOR ANGETRIEBENES RAD**
SEMI-TRAILING ARM WHEEL SUSPENSION FOR A WHEEL DRIVEN BY AN ELECTRICAL OR PNEUMATIC MOTOR
SUSPENSION DE ROUE À BRAS OBLIQUE DESTINÉE À UNE ROUE ENTRAÎNÉE PAR UN MOTEUR ÉLECTRIQUE OU PNEUMATIQUE

(30) Priorität: 12.09.2018 DE 102018215532; 10.10.2018 DE 102018217347
(43) Veröffentlichungstag der Anmeldung: 21.07.2021
(73) Patentinhaber: Ziehl-Abegg Automotive GmbH & Co. KG, 74635 Kupferzell (DE)
(72) Erfinder: BIFANO, Natale Cosmo, 60598 Frankfurt (DE); SIAMENAU, Dzmitry, 74523 Schwäbisch Hall (DE)
(74) Vertreter: Ullrich & Naumann PartG mbB
(86) Internationale Anmeldenummer: PCT/DE2019/200093
(87) Internationale Veröffentlichungsnummer: WO 2020/052717

(56) Entgegenhaltungen:
- DE-A1- 1 675 276
- DE-A1-102013 000 541
- DE-T2- 60 101 875
- DE-U1-202017 001 665
- US-A1- 2003 230 443
- US-A1- 2006 076 197
- US-A1- 2008 053 725
- Anonymous: "Schräglenkerachse", Wikipedia , 24. September 2017 (2017-09-24), XP002795962, Gefunden im Internet: URL:https://de.wikipedia.org/w/index.php?t itle=Schr%C3%A4glenkerachse&oldid=16937761 0 [gefunden am 2019-11-10]

## Beschreibung

Die Erfindung betrifft eine Radaufhängung, nach dem Oberbegriff des Anspruchs 1, für ein über einen elektrischen oder pneumatischen Motor angetriebenes Rad eines Fahrzeugs, insbesondere Hinterrad eines Nutzfahrzeugs. Beispiele für eine solche Radaufhängung sind aus US 2003/230443 A1 und DE 20 2017 001665 U1 bekannt. DE 10 2013 000541 A1 offenbart einen Längsarm mit elektrischem Radnabenantrieb, wobei eine Bremsvorrichtung am Motorgehäuse angebracht ist.

Radaufhängungen der in Rede stehenden Art sind seit Jahren aus der Praxis bekannt. Insbesondere für Hinterachsen sind 1-Lenker-Aufhängungen verbreitet, beispielsweise Längslenker- oder Schräglenkeraufhängungen. Bei diesen Aufhängungen ist das Rad über lediglich einen sogenannten Lenker - die Schwinge - schwenkbar am Fahrzeug gelagert. Bei diesen 1-Lenker-Aufhängern können im Betrieb auftretende Längs- und Querkräfte am günstigsten aufgefangen werden, wenn die Schwinge schräg angeordnet ist (Schräglenkeraufhängung) und aufbauseitig zwei Lagerstellen mit großem Abstand zueinander aufweist. Dabei kann eine Schwenkachse der Schwinge in einer horizontalen Ebene schräg zu einer Fahrzeugquerachse verlaufen (Pfeilungswinkel) und in einer horizontalen Ebene schräg zu der Fahrzeugquerachse verlaufen (Dachwinkel). Durch Manipulation des Pfeilungswinkels und/oder des Dachwinkels lässt sich beispielsweise das Wankzentrum, die Spurweitenänderung, die Bremsnickabstützung und die Sturzänderung gezielt manipulieren.

Begrenzt wird diese Manipulierbarkeit dadurch, dass die linken und rechten Räder einer Achse bei Radaufhängungen nach dem Stand der Technik durch den Antriebsstrang - regelmäßig über ein Differentialgetriebe - miteinander gekoppelt sind. Durch Wechselwirkungen zwischen den Rädern lässt sich das Fahrzeugverhalten nur begrenzt beherrschen.

Die bekannten 1-Lenker-Aufhängungen und insbesondere Schräglenkeraufhängungen sind in der Regel mit umständlichen Anbindungen für Bremsvorrichtungen versehen, insbesondere um ein Bremsdrehmoment von einer Bremsvorrichtung des Fahrzeugs auf das jeweilige Rad zu übertragen. Herkömmliche Bremsen sind beispielsweise an einer Radträgerplatte angebunden, regelmäßig auch eine Welle des Antriebsstrangs in der Radaufhängung lagern, um das Rad anzutreiben.

Diese Art der Anbindung von Bremsvorrichtungen an eine Radaufhängung erfordert einen vergleichsweise großen Bauraum, der dann nicht mehr für andere Komponenten des Fahrzeugs nutzbar ist. Außerdem ist das Zusammenspiel der Bremsvorrichtung mit den anderen Elementen der Radaufhängungen kompliziert, empfindlich und schwierig zu kontrollieren.

Der vorliegenden Erfindung liegt daher die Aufgabe zugrunde, eine Radaufhängung der eingangs genannten Art zu vereinfachen und auf platzsparende Weise auszugestalten und robuster weiterzubilden.

Erfindungsgemäß wird die voranstehende Aufgabe durch die Merkmale des Anspruches 1 gelöst. Danach ist eine Radaufhängung für ein über einen elektrischen oder pneumatischen Motor angetriebenes Rad eines Fahrzeugs angegeben. Das angetriebene Rad ist insbesondere das Hinterrad eines Nutzfahrzeugs. Dabei kann es sich beispielsweise um Niederflurfahrzeuge wie Stadtbusse und Flughafenbusse, um Doppeldecker, oder um andere Nutzfahrzeuge handeln.

Die Radaufhängung umfasst eine Schwinge, die in einem ersten Bereich um eine Schwenkachse schwenkbar an dem Fahrzeug gelagert ist, und in einem zweiten Bereich an dem Fahrzeug abgestützt ist. Eine erste Bremsvorrichtung ist in einem dritten Bereich an der Schwinge angebracht.

In erfindungsgemäßer Weise ist erkannt worden, dass die zugrundeliegende Aufgabe auf überraschend einfache Weise gelöst werden kann. Durch das direkte Anbringen der Bremsvorrichtung an der Schwinge ist die erste Bremsvorrichtung für Wartungs- und Austauscharbeiten leichter zugänglich. Ferner erübrigt sich eine kompliziertere Aufhängung von Bremskomponenten, die bei Radaufhängungen nach dem Stand der Technik an einem separaten Radträgerelement angebunden sind. Das direkte Anbringen der Bremsvorrichtung an der Schwinge spart zudem Bauraum und vereinfacht die Radaufhängung durch den Wegfall eines Radträgerelements.

Vorzugsweise kann die erste Bremsvorrichtung ein Bremssattel einer Scheibenbremse sein. Hierbei kann es sich um eine pneumatische Scheibenbremse handeln, so wie es bei Nutzfahrzeugen nach dem Stand der Technik üblich ist. Vorzugsweise ist die Scheibenbremse hydraulisch oder hydropneumatisch ausgeführt, allerdings sind auch elektrische, elektromechanische sowie elektrohydraulische Bremsvorrichtungen denkbar.

Weiter vorzugsweise kann die Schwinge eine Aussparung und/oder eine Materialanhäufung aufweisen, um eine Bremsscheibe der Scheibenbremse wenigstens teilweise zu umschließen. Dadurch kann die Bremsscheibe geschützt werden, beispielsweise vor Steinschlag oder anderen Störeinflüssen auf einer Fahrbahn - wie zum Beispiel Schnee und Eis, Geäst und Gestrüpp, Schlaglöcher und Fahrbahnunebenheiten. Die Bremsscheibe ist vorzugsweise drehfest mit dem drehenden Teil des Motors verbunden, sodass eine auf die Bremsscheibe aufgeprägte Bremskraft direkt ein Bremsdrehmoment auf das Rad überträgt.

Nach einer Ausführungsform kann der dritte Bereich der Schwinge ferner ausgebildet sein, um eine zweite Bremsvorrichtung daran zu anzubringen. Die zweite Bremsvorrichtung ist vorzugsweise nicht ebenfalls als Bremssattel einer Scheibenbremse ausgebildet, sondern kann auch eine andere Art von Bremsvorrichtung umfassen.

Insbesondere kann die zweite Bremsvorrichtung eine Parkbremsvorrichtung sein. Dabei kann es sich um eine Feststellbremse handeln, die ebenfalls auf die Bremsscheibe wirken kann.

Vorzugsweise können die erste Bremsvorrichtung und die zweite Bremsvorrichtung jeweils auf einer Oberseite und einer Unterseite der Schwinge ankoppelbar sein, oder umgekehrt. Beispielsweise kann die erste Bremsvorrichtung als Bremssattel ausgebildet sein, und sich auf der Oberseite der Schwinge befinden. Die als Parkbremsvorrichtung ausbildete zweite Bremsvorrichtung kann auf der Unterseite der Schwinge befestigt sein. Durch eine derartige geschickte Ausgestaltung des dritten Bereichs der Schwinge wird eine zweiseitige "TWO FACE" Bremsanbindung sowohl oben als auch unten an der Schwinge verwirklicht.

Weiter vorzugsweise kann die erste Bremsvorrichtung und/oder die zweite Bremsvorrichtung über eine Schnittstelle und/oder über einen Bremsadapter an dem dritten Bereich anbringbar sein, um ein Baukastensystem zu verwirklichen. Dabei können unterschiedliche Bremsvorrichtungen beispielsweise über Durchgangsbohrungen oder Gewindebohrungen an Schnittstelle oder Bremsadapter angebunden werden. Das Baukastensystem kann insbesondere modular ausgebildet sein, also mit universellen oder einheitlichen Schnittstellen für die Anbindung verschiedener Bremsvorrichtungen für verschiedene Anwendungsfälle, beispielsweise für die Anwendung in LKW's, Bussen, oder anderen Nutzfahrzeugen.

In weiteren Ausgestaltungen kann ein dritter Bereich der Schwinge einen gegenüber der Schwinge drehfesten Teil des Motors tragen, um mit einem drehenden Teil des Motors auf das Rad ein Drehmoment zu übertragen.

Der Motor treibt somit lediglich ein Rad des Fahrzeugs an. Anstelle einer komplizierten Lagerung einer Antriebswelle in der Schwinge ist der Motor direkt mit der Schwinge verbunden. Diese Lösung ist platzsparend, denn ein Antriebsstrang entfällt komplett, so dass im Bodenbereich des Fahrzeugs sehr viel mehr Bauraum für andere Zwecke oder Bauteile zur Verfügung steht, beispielsweise um Batterien im Fahrzeugunterbau unterzubringen. Somit ist einerseits die Energieversorgung des Motors über kurze Zuleitungswege gesichert, andererseits wird der Schwerpunkt des gesamten Fahrzeugs nach unten verlagert. Durch einen tiefen Scherpunkt lassen sich auch elektrisch oder pneumatisch betriebene Nutzfahrzeuge in Leichtbauweise herstellen und noch energiesparender ausbilden.

Erfindungsgemäß ist der Motor als Radnabenantrieb ausgebildet. Dabei kann es sich um einen getriebelosen permanenterregten Synchronmotor (PMSM) mit Außenläufer handeln, denkbar ist allerdings auch die Verwendung von anderen Antriebskonzepten mit Vorgelegegetrieben oder Planetengetrieben.

Diese Ausgestaltung des Motors als Radnabenantrieb ist besonders platzsparend, da sowohl der stehende und der drehende Teil des Motors als auch das Rad außenseitig, bzw. radseitig auf der Schwinge sitzen, sodass die gesamte Radaufhängung noch platzsparender ausgeführt ist. Bei der Verwendung der Radaufhängung in Stadtbussen oder Flughafenbussen wird somit nicht nur eine noch niedrigere und noch fahrgastfreundlichere Niederflurbauweise ermöglicht. Vielmehr lässt sich durch Wegfall der Vorgelegegetriebe zudem eine größere Durchgangsbreite zwischen zwei Radaufhängungen einer Achse, beispielsweise der Hinterachse, realisieren. Das Fahrzeug wäre somit auf seiner gesamten Länge für beispielsweise Kinderwägen oder Rollstühle nutzbar.

Ferner lassen sich auch bereits im Betrieb befindliche Fahrzeuge, die mit herkömmlichen Antriebssträngen und einer 1-Lenker- Aufhängung versehen sind, mit einer erfindungsgemäßen Radaufhängung einfach und kostengünstig auf einen Elektroantrieb beziehungsweise auf einen pneumatischen Antrieb umrüsten.

Die dafür benötigten Batterien lassen sich dann beispielsweise im anstelle des Antriebsstrangs im Fahrzeugunterbau, oder dort, wo sich zuvor der Verbrennungsmotor befunden hat, unterbringen und je nach Art des Nutzfahrzeugs anforderungsgerecht dimensionieren, um eine erforderliche Reichweite des Nutzfahrzeugs gewährleisten zu können.

Durch das Wegfallen der Elemente des Antriebsstrangs lassen sich trotz elektrischem oder pneumatischen Motor die radgefederten Massen reduzieren. Die Räder federn durch die jeweilige Radaufhängung vollkommen unabhängig voneinander ein, und lassen sich durch den jeweiligen Motor vollkommen unabhängig voneinander ansteuern und bewegen, so dass das Schwingungsverhalten des Fahrzeugs verbessert werden kann.

Erfindungsgemäß ist die Schwinge eine Schräglenkerschwinge. Durch entsprechende Dimensionierung sind Schräglenkerradaufhängungen in der Lage, die beim Fahren auftretenden Längs- und Querkräfte besonders vorteilhaft aufzunehmen und die Fahrwerkskinematik zu verbessern.

Vorzugsweise ist die Schwinge mit einem Pfeilungswinkel der in einem ersten Winkelbereich zwischen 10° und 25° liegt und mit einem Dachwinkel, der in einem zweiten Bereich zwischen 0° und 5° liegt. In diesen Winkelbereichen führt die Verwendung von Schräglenkeraufhängungen zu einem besonders geringen Reifenverschleiß und einem vorteilhaften Wankverhalten.

Weiter vorzugsweise kann der erste Bereich der Schwinge als Hohlkörper ausgebildet sein. Somit lässt sich der Schräglenker unter Einsatz der Gusstechnologie herstellen. Möglich ist jedoch auch die Herstellung mit Blechteilen und durch Schweißen oder mittels 3D-Druck der Schwinge. Die Schwinge kann aus Metall, vorzugsweise aus Stahl- oder Eisenguss bestehen, wobei auch Ausgestaltungen unter Einsatz von Aluminium, faserverstärkten Kunststoffen (FVK) oder ähnlichen Werkstoffen denkbar sind. Vorzugsweise kann die Schwinge innerhalb des vorderen Bereich eine Gitter- oder Rippenstruktur aufweisen, was die Stabilität der Schwinge steigert. Der dritte Bereich kann in Vollmaterial ausgebildet sein. Der zweite Bereich kann je nach Anwendungsfall in Vollmaterial oder als Hohlkörper, gegebenenfalls mit einer Gitter- oder Rippenstruktur, ausgebildet sein. Somit lässt sich beispielsweise eine Gewichtsreduktion erreichen. In einer Ausführungsform kann der zweite Bereich gleich dem dritten Bereich sein.

Vorzugsweise kann die Lagerung der Schwinge am Fahrzeug mittels zweier Gummilager im ersten Bereich der Schwinge ausgebildet sein. Die Lagerung kann über einen Hilfsrahmen beziehungsweise einen Fahrschemel, erfolgen. Zudem kann die Lagerung der Schwinge über eine Drehstabfeder erfolgen.

Schließlich kann die Schwinge in dem zweiten Bereich über einen Schwingungsaufnehmer an dem Fahrzeug abgestützt sein. Hierbei kann die Schwinge insbesondere eine Schnittstelle zur Anbindung von unterschiedlichen Arten von Schwingungsaufnehmern aufweisen.

Auf diese Weise lassen sich je nach Anwendungsfall unterschiedliche Arten von Schwingungsaufnehmen flexibel in die Radaufhängung integrieren. Dies kann insbesondere von der Art des Fahrzeugs oder Nutzfahrzeugs abhängig sein. Der jeweilige Schwingungsaufnehmer kann somit individuell kompatibel für einzelne Fahrzeugklassen oder Fahrzeugtypen ausgewählt und einheitlich über die Schnittstelle angebunden werden. Durch das Schaffen einer universellen Schnittstelle ist die Radaufhängung ferner für zukünftige Technologien nachrüstbar. Auch die Reparatur und der Austausch von Schwingungsaufnehmern wird vereinfacht, so dass die Lebensdauer der Radaufhängung steigt. Auch die Komplexität und die Kosten der Herstellung sinken mit der Vielfalt an Teilen, die für verschiedene Baureihen konstruiert und vorgehalten werden müssen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine perspektivische Ansicht einer erfindungsgemäßen Radaufhängung mit einem Motor,
- Fig. 2: eine perspektivische Ansicht einer erfindungsgemäßen Radaufhängung ohne Motor,
- Fig. 3: eine perspektivische Ansicht einer erfindungsgemäßen Radaufhängung mit Motor und ohne Bremssattel,
- Fig. 4: eine perspektivische Ansicht einer erfindungsgemäßen Radaufhängung ohne Motor und ohne Bremssattel,
- Fig. 5: eine perspektivische Ansicht einer erfindungsgemäßen Radaufhängung mit einer pneumatischen Federdämpfervorrichtung,
- Fig. 6: eine perspektivische Ansicht einer erfindungsgemäßen Radaufhängung mit einem Adapter für eine pneumatische Federdämpfervorrichtung,
- Fig. 7: eine perspektivische Ansicht einer erfindungsgemäßen Radaufhängung mit einer hydropneumatischen Federdämpfervorrichtung, und
- Fig. 8: eine perspektivische Ansicht einer erfindungsgemäßen Radaufhängung mit einem Adapter für eine hydropneumatische Federdämpfervorrichtung.

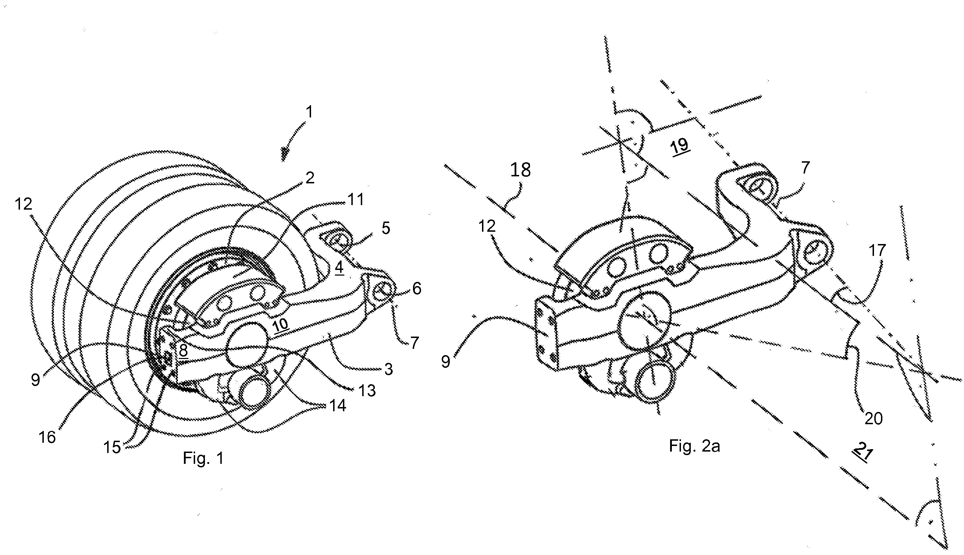

Fig. 1 zeigt eine Radaufhängung 1 für ein Rad eines Fahrzeugs, insbesondere für ein Hinterrad eines Nutzfahrzeugs (nicht dargestellt). Das Rad des Fahrzeugs ist über einen elektrischen Motor 2 in Gestalt eines Radnabenantriebs angetrieben. Ferner ist eine Schwinge 3 zu abgebildet. Die Schwinge 3 hat einen ersten Bereich 4. Die Schwinge 3 ist in dem ersten Bereich 4 an dem Fahrzeug (in Fig. 1 nicht dargestellt) gelagert. Hierfür sind im ersten Bereich 4 zwei Durchgangsbohrungen 5, 6 vorgesehen, die eine Schwenkachse 7 der Schwinge 3 definieren. Ein zweiter Bereich 8 der Schwinge 3 dient zur Abstützung der Schwinge 3 am Fahrzeug. Für diesen Zweck ist am zweiten Bereich 8 eine Schnittstelle 9 in Gestalt einer äußeren Stirnfläche am zweiten Bereich 8 ausgebildet. Ferner ist ein dritter Bereich 10 zu sehen, der einen drehfesten Teil des Motors 2 trägt. Die Schwinge 3 ist ein aus Metall gefertigtes Gussteil, wobei der erste Bereich 4 der Schwinge 3 als Hohlkörper ausgebildet ist. Der zweite Bereich 8 und der dritte Bereich 10 der Schwinge 3 sind in Vollmaterial ausgebildet. Beim Ausführungsbeispiel nach Fig. 1 ist der dritte Bereich 10 zentral zwischen dem ersten Bereich 4 und dem zweiten Bereich 8 angeordnet. Aufgrund der Hebelwirkung der Schwinge 3 führt diese Ausgestaltung zu einer geringeren Belastung der Radaufhängung 1 und ist somit kinematisch vorteilhaft. Allerdings könnte ebenso der zweite Bereich 8 zwischen dem ersten Bereich 4 und dem dritten Bereich 10 angeordnet sein.

Der drehfeste Teil des Motors 2 wird von dem dritten Bereich 10 der Schwinge 3 insbesondere drehfest getragen. Hierzu umfasst der dritte Bereich 10 eine nach außen gerichtete kegelförmige Fläche (in Fig. 1 nicht zu sehen), auf die der drehfeste Teil des Motors 2 aufgepresst ist. Somit kann der drehfeste Teil des Motors 1 mit einem drehenden Teil des Motors 2 zusammenwirken, um auf das Rad ein Drehmoment zu übertragen, wobei das Rad seinerseits drehfest mit dem drehenden Teil des Motors 2 verbunden ist.

Am dritten Bereich 10 der Schwinge 3 ist ferner eine erste Bremsvorrichtung 11 angebracht. Die erste Bremsvorrichtung 11 ist in Gestalt eines Bremssattels für eine Scheibenbremse ausgestaltet und über Schraubverbindungen (in Fig. 1 nicht zu sehen) an der Schwinge 3 fixiert. Der Bremssattel wirkt mit einer Bremsscheibe 12 zusammen, die drehfest mit dem drehenden Teil des Motors 2 verbunden ist. Außerdem sind an der Schwinge 3 Materialanhäufungen 13 zu erkennen, die die Bremsscheibe 12 zumindest in teilweise umschließen und somit vor mechanischen Störeinflüssen schützen.

Zudem ist am dritten Bereich 10 auch ein Bremsadapter 14 für eine zweite Bremsvorrichtung (in Fig. 1 nicht dargestellt) angebracht, insbesondere für eine Parkbremseinrichtung in Gestalt einer Feststellbremse. Es lassen sich verschiedenartige Bremsadapter 14 für verschiedenartige Bremsvorrichtungen an der Schwinge 3 anbringen.

Die Schnittstelle 9 dient zur Abstützung der Schwinge 3 am Fahrzeug beziehungsweise zur Anbindung von unterschiedlichen Arten von Schwingungsaufnehmern (in Fig. 1 nicht dargestellt). Die Schnittstelle 9 ist als eine von dem ersten Bereich 10 weg zeigende Stirnfläche der Schwinge 3 ausgebildet und umfasst Bohrungen 15 für Befestigungselemente (in Fig. 1 nicht dargestellt), um Schwingungsaufnehmer oder Adapter (in Fig. 1 nicht dargestellt) an der Schnittstelle 9 anzubringen. Auf der Stirnfläche ist beispielhaft eine Aussparung 16 dargestellt, um beispielsweise den Adapter auszurichten und Kräfte zwischen dem Adapter und der Schnittstelle übertragen. In Fig. 1 ist die Aussparung 16 in Gestalt einer rechteckigen Vertiefung ausgebildet, wobei je nach Anwendungsfall andere zweckmäßige Ausgestaltungen von Vertiefungen oder Materialhäufungen einerseits auf der Schnittstelle 9 mit entsprechend dazu passenden Materialhäufungen oder Vertiefungen auf dem Adapter möglich sind.

Nunmehr bezugnehmend auf Fig. 2a ist die Schwinge 3 als Schräglenkerschwinge für eine Schräglenkerradaufhängung ausgebildet. Hierbei ist die Schwinge 3 mit einem Pfeilungswinkel 17 angeordnet, der in einem ersten Winkelbereich zwischen 10° und 25° liegt. Der Pfeilungswinkel 17 ist der Winkel zwischen der Schwenkachse 7 und einer Fahrzeugquerachse 18 in einer horizontalen Ebene 19. Ferner ist die Schwinge 3 mit einem Dachwinkel 20 angeordnet, der in einem zweiten Winkelbereich zwischen 0° und 5° liegt. Der Dachwinkel 12 ist der Winkel zwischen der Schwenkachse 7 und der Fahrzeugquerachse 18 in einer vertikalen Ebene 21.

Die schräge Aufhängung - also die Lagerung der Schwinge 3 am Fahrzeug - erfolgt dabei an den Durchgangsbohrungen 5, 6 mittels zweier Gummilager (nicht dargestellt) im ersten Bereich 4 der Schwinge 3. Die Gummilager sind entweder direkt mit einer Aufnahme am Rahmen des Fahrzeugs befestigt oder zur Optimierung des Fahrkomforts an einem Hilfsrahmen gelagert. Ferner kann entlang der Schwenkachse 7 eine Drehstabfeder zur weiteren Federung zwischen mindestens einem der Gummilager und dem Rahmen oder Hilfsrahmen angebracht sein (nicht dargestellt).

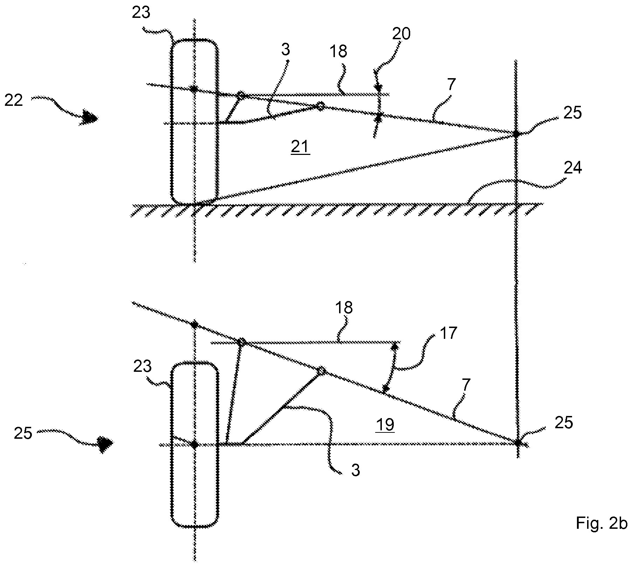

Noch deutlicher wird die Funktionsweise einer Schräglenkerradaufhängung sowie das Verhältnis zwischen Pfeilungswinkel 17 und Dachwinkel 18 bei Betrachtung von Fig. 2b. Der obere Teil 22 der Fig. 2b zeigt eine Ansicht in der vertikalen Ebene 21. Das Rad 23 steht auf der Fahrbahn 24. Die Schwinge 3 der Schräglenkerradaufhängung definiert eine Schwenkachse 7, auf der ein Momentanpol 25 des Rads 23 liegt. Die Schwinge 3 ist in der vertikalen Ebene 21 um den Dachwinkel 20 gekippt.

Der untere Teil 25 der Fig. 2b zeigt eine Ansicht in der horizontalen Ebene 19, also von oben. Auch im unteren Teil der Fig. 2b ist die Schwenkachse 7 gekippt, nämlich in der horizontalen Ebene 19 um den Pfeilungswinkel 17 in Bezug auf diee Fahrzeugquerachse 18. Durch Vergrößern des Pfeilungswinkels 17 sinkt die Sturzänderung beim Einfedern. Ferner erhöht sich das Wankzentrum, wobei das Wankzentrum durch eine Änderung des Dachwinkels 20 wieder abgesenkt werden kann. Durch Verkleinern des Pfeilungswinkels 17 oder durch Vergrößern des Dachwinkels 20 hingegen lässt sich eine günstigere Bremsnickabstützung erreichen.

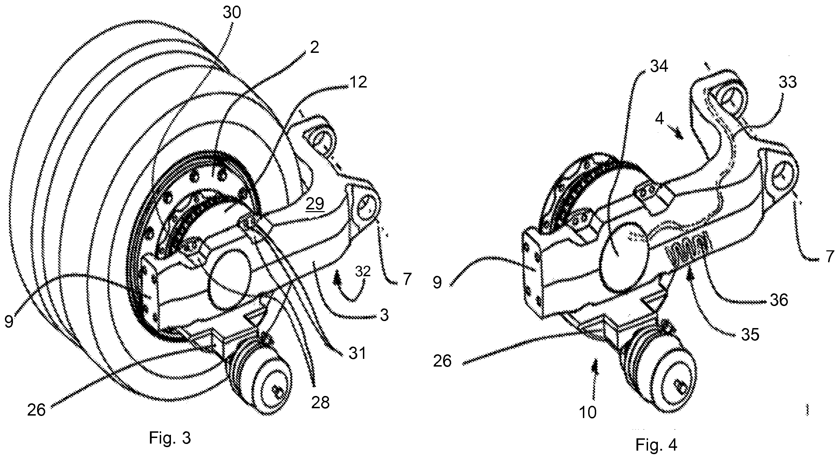

Fig. 3 zeigt die Radaufhängung 1 mit einer pneumatischen Bremsvorrichtung als zweite Bremsvorrichtung 26. Da die als Bremssattel ausgebildete erste Bremsvorrichtung 11 in Fig. 3 fehlt, ist die mit dem drehenden Teil des Motors 2 drehfest verbundene Bremsscheibe 12 in Fig. 3 besser zu erkennen. Die Schnittstelle 27 für die erste Bremsvorrichtung 11 ist in Gestalt von zwei Aussparungen 28 auf einer Oberseite 29 der Schwinge 3 ausgebildet. An den Aussparungen 28 befinden sich zwei radseitig angeordnete Seitenwände 30 mit jeweils zwei Durchgangsbohrungen 31 für Befestigungsmittel, mit denen die erste Bremsvorrichtung - beispielsweise ein Bremssattel - an der Oberseite 29 der Schwinge 3 befestigt werden kann (in Fig. 3 nicht dargestellt). Auf einer Unterseite 32 der Schwinge 3 ist anstelle eines Bremsadapters (in Fig. 3 nicht dargestellt) eine zweite Bremsvorrichtung 26 angebunden, die als pneumatische Bremsvorrichtung ausgebildet ist. Denkbar ist jedoch auch der umgekehrte Fall, bei dem eine erste Bremsvorrichtung in Gestalt eines Bremssattels auf der Unterseite 32 der Schwinge 3 angekoppelt ist und eine zweite Bremsvorrichtung auf der Oberseite 29 der Schwinge 3 angekoppelt ist, oder andere Ausgestaltungen mit zwei Bremsvorrichtungen auf der Oberseite 29 und der Unterseite 32 der Schwinge 3 (in Fig. 3 nicht dargestellt).

In Fig. 4 ist eine Leitung 33 angedeutet, die entlang der Schwinge 3 verläuft. Die Leitung 33 kann an der Schwinge 3 befestigt oder in einer Aussparung der Schwinge 3 angeordnet sein. Im vorliegenden Ausführungsbeispiel verläuft ist die Leitung 33 durch den ersten Bereich 4 und den dritten Bereich 10 der Schwinge 3 bis hin zu einem Durchgang 34. Der Durchgang 34 verläuft durch die Schwinge 8 und ermöglicht eine Führung der Leitung 33 bis hinein in ein Inneres der Radnabe.

Ferner sind in Fig. 4 in der Schwinge 3 Leitungen die Schwinge 3 integrierte Kanäle 35 zu sehen, die in Gestalt eines Wärmetauschers angeordnet sind. Hierbei können innerhalb und/oder außerhalb der Schwinge Rippen 36 des Wärmetausches vorgesehen sein, wobei die Rippen in Fig. 4 insbesondere innerhalb der Schwinge 3 verlaufen. Die Rippen 36 lassen sich insbesondere in den ersten Bereich 4 der Schwinge 3 integrieren, der als mit Rippen 36 durchzogener Hohlkörper ausgestaltet werden kann.

Mit einem solchen Wärmetauscher lässt sich die Kühlung des Motors (in Fig. 4 nicht dargestellt) optimieren. Aufgrund der Ausbildung der Rippen 36 und Leitungen des Wärmetauschers als in die Schwinge 3 integrierte Kanäle 35 kann die Teilevielfalt gesenkt werden. Weiterhin kann die Wärmeübertragung innerhalb des Wärmetauschers nah am Rad stattfinden, ohne dass Kühlmittel über lange Strecken hinweg gefördert werden muss und der für den Betrieb des Wärmetauschers erforderliche Temperaturunterschied dadurch absinkt.

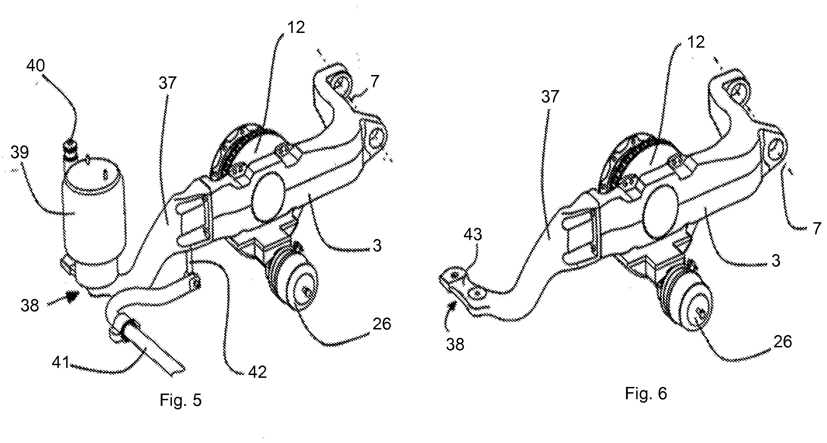

In Fig. 5 ist eine Radaufhängung 1 zu sehen, bei der ein Schwingungsaufnehmer über einen Adapter 37 an der Schnittstelle 9 angebunden ist. Der Schwingungsaufnehmer ist als eine pneumatische Feder-Dämpfer-Vorrichtung ausgebildet. Der Adapter 37 ist als eine Verlängerung der Schwinge 3 ausgebildet und läuft in Richtung weg von der Schwinge zu einem Ende 38 hin zu. An dem Ende 38 des Adapters 37 ist ein Luftfederelement 39 und ein Dämpferelement 40 befestigt. Ein zusätzlicher mit dem Fahrzeug verbundener Stabilisator 41 dämpft Schwingungen der Schwinge 3 und wird mittels eines Stabilenkers 42 mit dem Adapter 37 verbunden.

Fig. 6 zeigt die Baugruppe aus Fig. 5 ohne Luftfederelement und Dämpferelement. Es ist zu sehen, dass das Ende 38 eine im Wesentlichen horizontale Fläche 43 aufweist, an der das Federelement und das Dämpferelement der pneumatischen Feder-Dämpfer-Vorrichtung 39, 40 ankoppelbar sind.

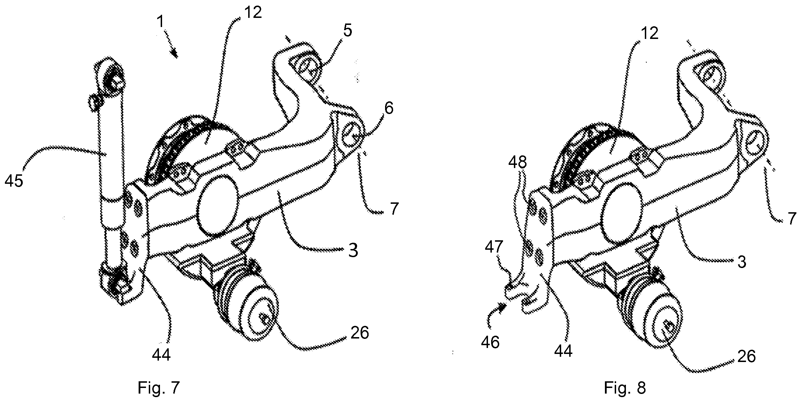

Die in Fig. 7 dargestellte Radaufhängung 1 weist einen Schwingungsaufnehmer auf, der über einen anderen Adapter 44 an der Schnittstelle 9 angebunden ist. Die Schwinge 3 sowie die Schnittstelle 9 für die Anbindung der Adapter 37, 44 muss hierfür nicht verändert werden. Auf diese Weise sind sowohl die Schnittstelle 9 als auch die Adapter 37, 44 ausgebildet, um ein Baukastensystem zu verwirklichen. Der Schwingungsaufnehmer ist eine hydropneumatische Feder-Dämpfer-Vorrichtung 45. Mit der hydropneumatischen Feder-Dämpfer-Vorrichtung 45 lassen sich Wankbewegungen in Kurven auch ohne einen zusätzlichen Stabilisator weitestgehend eliminieren. Steifigkeit und Schwingungsaufnahmeverhalten der hydropneumatischen Feder-Dämpfer-Vorrichtung 45 sind über einen großen Bereich einstell- und regelbar und lassen sich damit nahezu unabhängig von der Beladung des Fahrzeugs konstant halten. Zur Anbindung der hydropneumatischen Feder-Dämpfer-Vorrichtung 45 ist der Adapter 44 in Gestalt eines Plättchens zur Lagerung der hydropneumatische Feder-Dämpfer-Vorrichtung ausgebildet.

In Fig. 8 - ohne hydropneumatische Feder-Dämpfer-Vorrichtung - ist zu sehen, dass der als Plättchen ausgebildete Adapter 44 an seinem unteren Ende eine in Gestalt zweier Erhöhungen ausgebildete Lagergabel 46 aufweist, die jeweils mit Lagerpunkten für eine gelenkige Lagerung der der hydropneumatische Feder-Dämpfer-Vorrichtung ausgebildet sind. Der als Plättchen ausgebildete Adapter 44 kann - ebenso wie der zuvor unter Bezugnahme auf die Fign. 5 und 6 beschriebene Adapter 37 - über Schraubverbindungen 48 an der Schnittstelle 9 befestigt werden, und ist im vorliegenden Ausführungsbeispiel über vier in einem Viereck angeordnete Schraubenverbindungen 48 an der Schnittstelle 9 befestigt.

Die in Verbindung mit den Fign. 5 bis 8 beschriebenen beispielhaften Ausgestaltungen 37, 44 der Adapter zeigen auf, wie sich die Schnittstelle 9 der Schwinge 3 zur Anbindung unterschiedlicher Arten von Schwingungsaufnehmern 39, 40, 45 eignet. Die Schnittstelle 9 der Schwinge 3 ist angepasst, um daran einen von einer Mehrzahl von sich unterscheidenden Adaptern 37, 44 zu befestigen, die beispielsweise für die Verwendung mit einer pneumatischen Feder-Dämpfer-Vorrichtung 39, 40, mit einer hydropneumatischen Feder-Dämpfer-Vorrichtung 45, oder mit elektrischen, elektromechanischen oder elektrohydraulischen Feder-Dämpfer-Vorrichtungen angepasst sein können. Auf diese Weise ist ein Baukastensystem verwirklicht.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Radaufhängung
- 2: Motor
- 3: Schwinge
- 4: Erster Bereich
- 5: Durchgangsbohrung
- 6: Durchgangsbohrung
- 7: Schwenkachse
- 8: Zweiter Bereich
- 9: Schnittstelle (Schwingungsaufnehmer)
- 10: Dritter Bereich
- 11: Erste Bremsvorrichtung
- 12: Bremsscheibe
- 13: Materialanhäufungen
- 14: Bremsadapter
- 15: Bohrungen
- 16: Aussparung (Adapter)
- 17: Pfeilungswinkel
- 18: Fahrzeugquerachse
- 19: Horizontale Ebene
- 20: Dachwinkel
- 21: Vertikale Ebene
- 22: Oberer Teil von Fig. 2b
- 23: Rad
- 24: Fahrbahn
- 25: Unterer Teil von Fig. 2b
- 26: Zweite Bremsvorrichtung
- 27: Schnittstelle (erste Bremsvorrichtung)
- 28: Aussparung (erste Bremsvorrichtung)
- 29: Oberseite
- 30: Seitenwand
- 31: Durchgangsbohrung
- 32: Unterseite
- 33: Leitung
- 34: Durchgang
- 35: Integrierte Kanäle
- 36: Rippen
- 37: Adapter (pneumatischer Schwingungsaufnehmer)
- 38: Ende
- 39: Luftfederelement
- 40: Dämpferelement
- 41: Stabilisator
- 42: Stabilenker
- 43: Horizontale Fläche
- 44: Adapter (hydropneumatischer Schwingungsaufnehmer)
- 45: Hydropneumatische Feder-Dämpfer-Vorrichtung
- 46: Lagergabel
- 47: Lagerpunkt
- 48: Schraubverbindungen

## Patentansprüche

1. Schräglenkerradaufhängung (1) für ein über einen elektrischen oder pneumatischen Motor (2) angetriebenes Rad (23) eines Fahrzeugs, insbesondere Hinterrad eines Nutzfahrzeugs, mit
einem elektrischen oder pneumatischen Motor (2), und
einer Schräglenkerschwinge (3), die in einem ersten Bereich (4) an dem Fahrzeug gelagert ist, und in einem zweiten Bereich (8) an dem Fahrzeug abgestützt ist, und
einer ersten Bremsvorrichtung (11),
wobei der Motor (2) als Radnabenantrieb ausgebildet ist,
**dadurch gekennzeichnet, dass** die Bremsvorrichtung (11) in einem dritten Bereich (10) direkt an der Schräglenkerschwinge (3) angebracht ist.

2. Schräglenkerradaufhängung (1) nach Anspruch 1, **dadurch gekennzeichnet, dass** die erste Bremsvorrichtung (11) ein Bremssattel einer Scheibenbremse ist.

3. Schräglenkerradaufhängung (1) nach Anspruch 2, **gekennzeichnet durch** eine Aussparung (28) und/oder eine Materialanhäufung an der Schräglenkerschwinge (3), um eine Bremsscheibe (12) der Scheibenbremse wenigstens teilweise zu umschließen.

4. Schräglenkerradaufhängung (1) nach Anspruch 2 oder 3, **dadurch gekennzeichnet, dass** der dritte Bereich (10) der Schräglenkerschwinge (3) ferner ausgebildet ist, um eine zweite Bremsvorrichtung (26) daran zu anzubringen.

5. Schräglenkerradaufhängung (1) nach Anspruch 4, **dadurch gekennzeichnet, dass** die zweite Bremsvorrichtung (26) eine Parkbremsvorrichtung ist.

6. Schräglenkerradaufhängung (1) nach Anspruch 4 oder 5, **dadurch gekennzeichnet, dass** die erste Bremsvorrichtung (11) und die zweite Bremsvorrichtung (26) jeweils auf einer Oberseite (29) und einer Unterseite (32) der Schräglenkerschwinge (3) ankoppelbar sind, oder umgekehrt.

7. Schräglenkerradaufhängung (1) nach einem der Ansprüche 1 bis 6, **dadurch gekennzeichnet, dass** der dritte Bereich (10) der Schräglenkerschwinge (3) einen gegenüber der Schräglenkerschwinge (3) drehfesten Teil des Motors (2) trägt, um mit einem drehenden Teil des Motors (2) auf das Rad ein Drehmoment zu übertragen.

8. Schräglenkerradaufhängung (1) nach einem der Ansprüche 1 bis 7, **dadurch gekennzeichnet, dass** die Schräglenkerschwinge (3) mit einem Pfeilungswinkel (17) angeordnet ist, der in einem ersten Winkelbereich zwischen 10° und 25° liegt, und mit einem Dachwinkel (20) angeordnet ist, der in einem zweiten Winkelbereich zwischen 0° und 5° liegt.

9. Schräglenkerradaufhängung (1) nach einem der Ansprüche 1 bis 8, **dadurch gekennzeichnet, dass** der erste Bereich (4) der Schräglenkerschwinge (3) als Hohlkörper ausgebildet ist und der dritte Bereich (10) der Schwinge (3) in Vollmaterial ausgebildet ist, und die Schräglenkerschwinge (3) aus Metall, vorzugsweise als Gussteil gefertigt ist.

10. Schräglenkerradaufhängung (1) nach einem der Ansprüche 1 bis 9, **dadurch gekennzeichnet, dass** die Lagerung der Schräglenkerschwinge am Fahrzeug mittels zweier Gummilager im ersten Bereich (4) der Schräglenkerschwinge (3) ausgebildet ist, die direkt oder über einen Hilfsrahmen an der Karosserie gelagert sind, vorzugsweise über eine Drehstabfeder.

11. Schräglenkerradaufhängung (1) nach einem der Ansprüche 1 bis 10, **dadurch gekennzeichnet, dass** die Schräglenkerschwinge in dem zweiten Bereich über einen Schwingungsaufnehmer (39, 40, 45), insbesondere eine Feder-Dämpfer-Vorrichtung, an dem Fahrzeug abgestützt ist und die Schräglenkerschwinge (3) vorzugsweise eine Schnittstelle (9) zur Anbindung von unterschiedlichen Arten von Schwingungsaufnehmern (39, 40, 45) aufweist.

## Claims

1. Tilted link wheel suspension (1) for a wheel (23), which is driven by means of an electric or pneumatic motor (2), of a vehicle, in particular a rear wheel of a utility vehicle, having an electric or pneumatic motor (2), and
a tilted link swing arm (3) which is supported on the vehicle in a first region (4) and which is supported on the vehicle in a second region (8), and
a first brake apparatus (11),
wherein the motor (2) is in the form of a wheel hub drive,
**characterised in that** the brake apparatus (11) is fitted directly to the tilted link swing arm (3) in a third region (10) .

2. Tilted link wheel suspension (1) according to claim 1, **characterised in that** the first brake apparatus (11) is a brake calliper of a disc brake.

3. Tilted link wheel suspension (1) according to claim 2, **characterised by** a recess (28) and/or a material accumulation on the tilted link swing arm (3) in order to at least partially surround a brake disc (12) of the disc brake.

4. Tilted link wheel suspension (1) according to claim 2 or 3, **characterised in that** the first region (10) of the tilted link swing arm (3) is further constructed to fit a second brake apparatus (26) thereon.

5. Tilted link wheel suspension (1) according to claim 4, **characterised in that** the second brake apparatus (26) is a parking brake apparatus.

6. Tilted link wheel suspension (1) according to claim 4 or 5, **characterised in that** the first brake apparatus (11) and the second brake apparatus (26) can be coupled in each case to an upper side (29) and a lower side (32) of the tilted link swing arm (3), or vice versa.

7. Tilted link wheel suspension (1) according to any one of claims 1 to 6, **characterised in that** the third region (10) of the tilted link swing arm (3) carries a portion of the motor (2) which is rotationally secure with respect to the tilted link swing arm (3) in order to transmit a torque to the wheel with a rotating portion of the motor (2).

8. Tilted link wheel suspension (1) according to any one of claims 1 to 7, **characterised in that** the tilted link swing arm (3) is arranged with a tapering angle (17) which is in a first angular range between 10° and 25° and is arranged with a roof angle (20) which is in a second angular range between 0° and 5°.

9. Tilted link wheel suspension (1) according to any one of claims 1 to 8, **characterised in that** the first region (4) of the tilted link swing arm (3) is in the form of a hollow member and the third region (10) of the swing arm (3) is made from solid material and the tilted link swing arm (3) is produced from metal, preferably as a cast component.

10. Tilted link wheel suspension (1) according to any one of claims 1 to 9, **characterised in that** the bearing of the tilted link swing arm is formed on the vehicle by means of two rubber bearings in the first region (4) of the tilted link swing arm (3) which are supported directly or by means of an auxiliary frame on the body, preferably by means of a torsion bar.

11. Tilted link wheel suspension (1) according to any one of claims 1 to 10, **characterised in that** the tilted link swing arm is supported on the vehicle in the second region by means of a vibration absorber (39, 40, 45), in particular a spring/damper apparatus, and the tilted link swing arm (3) preferably has an interface (9) for connection of different types of vibration absorbers (39, 40, 45).

## Revendications

1. Suspension de roue à bras oblique (1) pour une roue (23) d'un véhicule, entraînée par l'intermédiaire d'un moteur électrique ou pneumatique (2), plus particulièrement une roue arrière d'un véhicule utilitaire, avec un moteur électrique ou pneumatique (2) et
un bras oscillant de bras oblique (3), qui est logé, dans une première partie (4), sur le véhicule et qui est appuyé, dans une deuxième partie (8), contre le véhicule et
un premier dispositif de freinage (11),
dans lequel le moteur (2) est conçu comme un entraînement de moyeu de roue,
**caractérisée en ce que**
le dispositif de freinage (11) est monté, dans une troisième partie (10), directement ou sur le bras oscillant de bras oblique (3).

2. Suspension de roue à bras oblique (1) selon la revendication 1, **caractérisée en ce que** le premier dispositif de freinage (11) est un étrier de frein d'un frein à disque.

3. Suspension de roue à bras oblique (1) selon la revendication 2, **caractérisée par** un évidement (28) et/ou une accumulation de matériau au niveau du bras oscillant de bras oblique (3), afin d'entourer au moins partiellement un disque de frein (12) du frein à disque.

4. Suspension de roue à bras oblique (1) selon la revendication 2 ou 3, **caractérisée en ce que** la troisième partie (10) du bras oscillant de bras oblique (3) est en outre conçue afin de monter un deuxième dispositif de freinage (26) dessus.

5. Suspension de roue à bras oblique (1) selon la revendication 4, **caractérisée en ce que** le deuxième dispositif de freinage (26) est un dispositif de freinage de stationnement.

6. Suspension de roue à bras oblique (1) selon la revendication 4 ou 5, **caractérisée en ce que** le premier dispositif de freinage (11) et le deuxième dispositif de freinage (26) peuvent être couplés respectivement sur un côté supérieur (29) et un côté inférieur (32) du bras oscillant de bras oblique (3), ou inversement.

7. Suspension de roue à bras oblique (1) selon l'une des revendications 1 à 6, **caractérisée en ce que** la troisième partie (10) du bras oscillant de bras oblique (3) supporte une partie fixe du moteur (2) par rapport au bras oscillant de bras oblique (3), afin de transmettre un couple à la roue avec une partie rotative du moteur (2).

8. Suspension de roue à bras oblique (1) selon l'une des revendications 1 à 7, **caractérisée en ce que** le bras oscillant de bras oblique (3) est disposé avec un angle de flèche (17) qui se trouve dans une première plage angulaire entre 10° et 25° et est disposé avec un angle de toit (20) qui se trouve dans une deuxième plage angulaire entre 0° et 5°.

9. Suspension de roue à bras oblique (1) selon l'une des revendications 1 à 8, **caractérisée en ce que** la première partie (4) du bras oscillant de bras oblique (3) est conçue comme un corps creux et la troisième partie (10) du bras oscillant (3) est constituée d'un matériau massif, et le bras oscillant de bras oblique (3) est constitué de métal, de préférence sous la forme d'une pièce coulée.

10. Suspension de roue à bras oblique (1) selon l'une des revendications 1 à 9, **caractérisée en ce que** le palier du bras oscillant de bras oblique est disposé sur le véhicule au moyen de deux paliers en caoutchouc, dans la première partie (4) du bras oscillant de bras oblique (3), qui sont logés directement ou par l'intermédiaire d'un cadre auxiliaire, sur la carrosserie, de préférence par l'intermédiaire d'une barre de torsion.

11. Suspension de roue à bras oblique (1) selon l'une des revendications 1 à 10, **caractérisée en ce que** le bras oscillant de bras oblique est appuyé, dans la deuxième partie, par l'intermédiaire d'un amortisseur de vibrations (39, 40, 45), plus particulièrement un dispositif amortisseur à ressort, contre le véhicule et le bras oscillant de bras oblique (3) comprend de préférence une interface (9) pour le montage de différentes sortes d'amortisseurs de vibrations (39, 40, 45).
